# FASCICULE DE BREVET EUROPEEN

(11) **EP 1 784 301 B1**
(45) Date de publication et mention de la délivrance du brevet: **29.04.2015**
(21) Numéro de dépôt: 05800604.0
(22) Date de dépôt: 01.09.2005
(51) Int. Cl.: B32B 5/28, B62D 21/15

(54) **MATERIAU PLASTIQUE UTILISABLE NOTAMMENT POUR REALISER DES PLANCHERS DE VEHICULES AUTOMOBILES ET PLANCHER DE VEHICULE AUTOMOBILE REALISE AVEC UN TEL MATERIAU**
PLASTIKMATERIAL, DAS INSBESONDERE ZUR HERSTELLUNG VON KRAFTFAHRZEUGBODENGRUPPEN VERWENDET WERDEN KANN, UND AUS EINEM DERARTIGEN MATERIAL HERGESTELLTE KRAFTFAHRZEUGBODENGRUPPE
PLASTIC MATERIAL THAT CAN BE USED, IN PARTICULAR, FOR PRODUCING MOTOR VEHICLE FLOOR PANS, AND MOTOR VEHICLE FLOOR PAN MADE WITH SUCH A MATERIAL

(30) Priorité: 02.09.2004 FR 0409293
(43) Date de publication de la demande: 16.05.2007
(73) Titulaire: Inoplast, 07100 Annonay (FR)
(72) Inventeur: PERRET, Philippe, F-07300 Mauves (FR); BOSG, Patrick, F-26240 Saint Barthélémy de Vals (FR)
(74) Mandataire: Remy, Vincent Noel Paul
(86) Numéro de dépôt international: PCT/FR2005/002183
(87) Numéro de publication internationale: WO 2006/027482

(56) Documents cités:
- EP-A- 1 288 109
- EP-A- 1 398 246
- DE-A1- 10 247 425
- US-A1- 2003 207 143

## Description

La présente invention concerne un matériau plastique utilisable notamment pour réaliser des planchers de véhicules automobiles, et un plancher de véhicule automobile réalisé avec un tel matériau.

On connaît déjà des planchers de véhicules réalisés en SMC (shield moulded compound, ou complexe moulé en feuille), c'est-à-dire en matière plastique thermodurcissable à laquelle sont mélangées des fibres de renfort telles que des fibres de verre.

En particulier, sont ainsi réalisés des planchers arrière qui comportent un logement pour une roue de secours et qui laissent libre un passage pour une tubulure d'alimentation en carburant qui relie une trappe d'alimentation et un réservoir à carburant.

Jusqu'à présent, un tel plancher était considéré comme suffisamment résistant pour pouvoir supporter des chocs arrière sans causer de graves dommages à son environnement immédiat, et notamment à la tubulure d'alimentation en carburant précédemment mentionnée.

Cependant, de nouvelles exigences en matière de sécurité sont régulièrement formulées et le besoin existe d'un plancher qui procure encore de meilleures garanties en cas de choc arrière. De façon plus précise, il serait avantageux de pouvoir disposer d'un plancher qui, lors de l'écrasement de l'arrière du véhicule à la suite d'un choc, se déforme sans trop endommager les fixations qui le retiennent à son support, de façon à demeurer à l'intérieur du logement qui lui est réservé, ni se rompre en formant des bords tranchants, ces deux critères traduisant l'objectif de ne pas étrangler ni couper la tubulure d'alimentation en carburant.

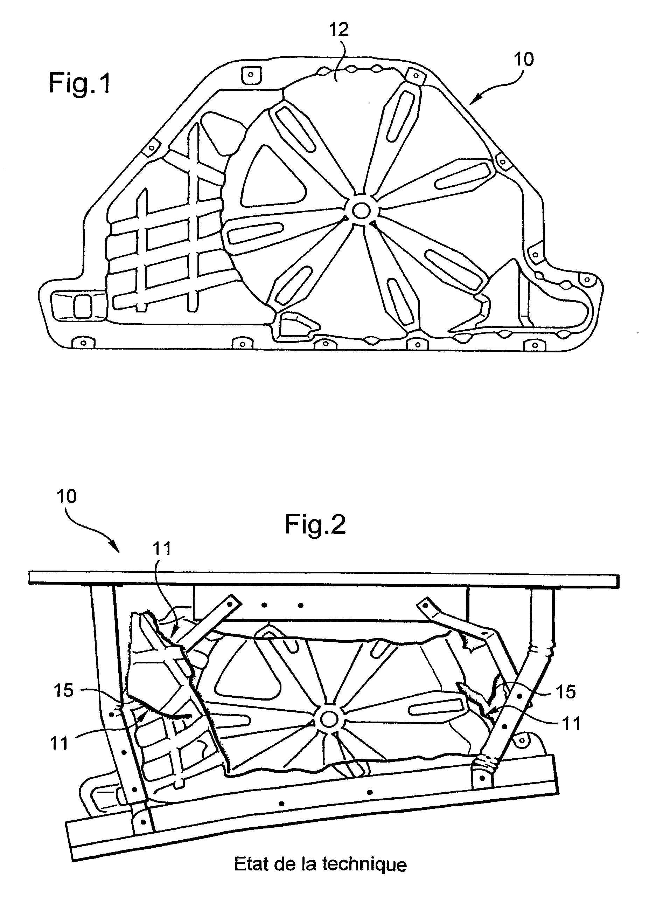

On a représenté, sur la figure 2, un plancher 10 de l'état de la technique, réalisé en SMC, après un choc à l'arrière du véhicule, par exemple un choc à 80 km/h. On voit que le plancher est rompu en certains emplacements, désignés ruptures 11, formant des bords tranchants 15.

Par ailleurs, on exige aussi d'un plancher de véhicule qu'il empêche le passage de flammes dans l'habitacle, même lorsqu'il est endommagé à la suite d'un choc. A cet effet, le plancher ne doit pas présenter d'ouvertures ni de fissures traversantes par lesquelles pourraient passer les flammes.

Sur la figure 2, on voit que les ruptures 11 peuvent permettre le passage de flammes générées suite au choc.

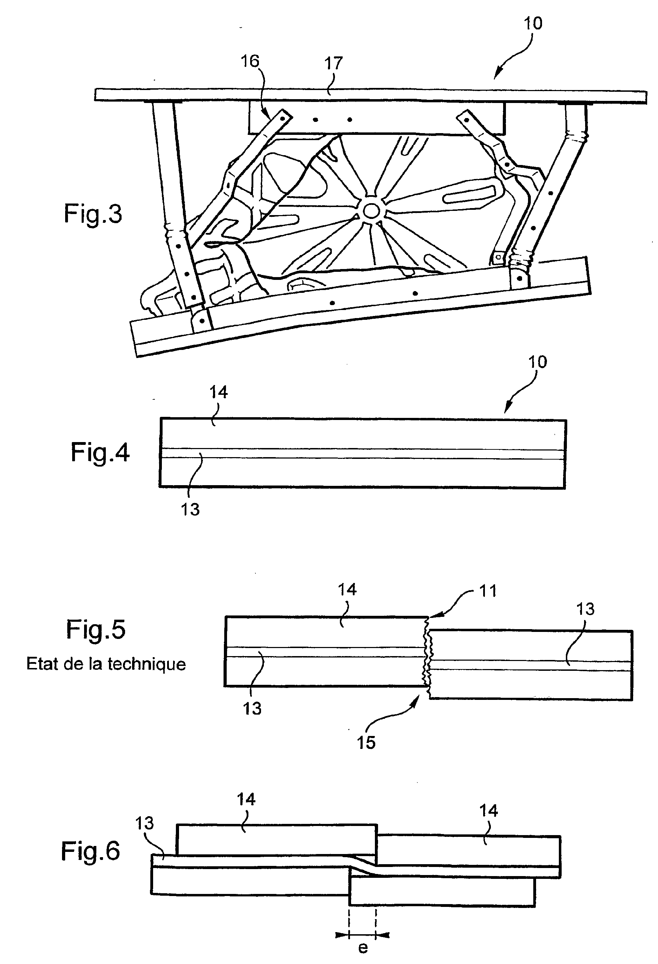

On a représenté, sur les figures 4 et 5, une coupe schématique du matériau constituant le plancher, à l'échelle d'une fibre 13 noyée dans une matière plastique 14.

Sur la figure 4, avant le choc, le matériau est intact, tandis que sur la figure 5, après le choc, apparaît une rupture 11.

On connaît par ailleurs les matériaux thermoplastiques renforcés de tissus de fibres de renfort. Chacun de ces matériaux, grâce au tissu de fibres qui lui confère une bonne stabilité mécanique, se présente à priori comme un bon candidat à la fabrication de pièces susceptibles de supporter des déformations importantes sans se rompre, mais l'expérience montre que tel n'est pas le cas car les déformations du plancher induites par un choc arrière du véhicule engendrent des ruptures du plancher qui sont rédhibitoires, puisqu'elles peuvent permettre le passage de flammes dans l'habitacle.

Les inventeurs à la base de la présente invention ont cherché à caractériser un nouveau matériau capable de répondre aux objectifs précités sans qu'il soit nécessaire de concevoir une nouvelle géométrie de plancher.

Ainsi, l'invention vise à proposer un matériau plastique qui conserve ses propriétés de rigidité indispensables à son utilisation comme matériau constitutif d'un plancher, tout en étant davantage apte à se déformer sans se rompre, en approchant par exemple le comportement d'une tôle d'acier.

Ce matériau est composé d'une matière plastique et d'un tissu de fibres de renfort noyé dans la matière plastique et est **caractérisé par le fait que** les fibres du tissu et la matière plastique sont choisies de manière que lorsque le matériau est au repos, les fibres sont solidarisées à la matière, et qu'à partir d'un certain niveau de sollicitation du matériau, les fibres se désolidarisent de la matière sur une certaine longueur sans se rompre.

De façon surprenante, les inventeurs ont constaté que pour rendre le matériau moins cassant, mais tout aussi rigide qu'auparavant, il ne suffisait pas de le renforcer avec un tissu de fibres de renfort.

Au contraire, la difficulté à surmonter consistait à obtenir du matériau des propriétés a priori contradictoires, à savoir une bonne rigidité et également une aptitude à se plier sous une certaine contrainte.

A l'issue de nombreux essais, les inventeurs ont finalement identifié a posteriori la caractéristique permettant d'obtenir les propriétés souhaitées mais apparemment contradictoires du matériau. En cas de forte sollicitation du matériau, les fibres du tissu de renfort doivent pouvoir s'allonger pour conserver l'unité du matériau, sans que les contraintes locales, qui se reportent donc sur les fibres, ne provoquent leur rupture.

Par conséquent, en faisant en sorte qu'en cas de forte sollicitation locale du matériau, une longueur non négligeable des fibres se libère de la matière plastique, de part et d'autre de la zone de sollicitation, les fibres peuvent s'allonger sur cette longueur ainsi libérée et se conformer à la déformation imposée au matériau. On conserve ainsi l'unité du matériau.

En d'autres termes, l'invention revient à libérer les fibres de manière à réduire leur taux d'allongement et éviter leur rupture.

Ainsi, on obtient un matériau selon l'invention en choisissant la matière plastique et les fibres de renfort de manière que, dans un premier temps, les fibres soient noyées dans la matière plastique et y soient fermement solidarisées, pour assurer la tenue mécanique du matériau jusqu'à un certain niveau de sollicitation, et que, dans un second temps, si une sollicitation locale particulièrement importante se produit, les fibres se désolidarisent de la matière plastique et puissent s'allonger. La désolidarisation des fibres est également appelée délaminage.

Selon d'autres caractéristiques avantageuses de l'invention, qui peuvent être prises seules ou en combinaison :
- les fibres du tissu sont des fibres ayant subi un traitement par ensimage ;
- le tissu de fibres est noyé dans la matière plastique par calandrage lors de la fabrication ;
- le matériau comporte des fibres coupées noyées dans la matière plastique en plus du tissu de fibres ;
- le matériau comporte des produits additionnels tels que des colorants, des agents de mûrissement, des catalyseurs ou des inhibiteurs ;
- les fibres sont choisies parmi des fibres de verre, des fibres organiques ou des fibres métalliques ;
- la matière plastique est une matière thermodurcissable, par exemple du polyester ;
- la matière plastique est une matière thermoplastique, par exemple du polypropylène ;
- le grammage du tissu est compris entre 200 et 800 g/m² ;
- le matériau comporte entre 25% et 33% de fibres et entre 33% et 49% de matière plastique.

L'invention à également pour objet un plancher de véhicule automobile **caractérisé en ce qu'**il est conçu en un matériau selon l'invention.

De manière optionnelle, le plancher de véhicule automobile selon l'invention comporte du matériau selon l'invention uniquement dans des zones susceptibles d'être sollicitées lors d'un choc.

L'invention sera mieux comprise à la lecture de la description qui va suivre, donnée uniquement à titre d'exemple et faite en se référant aux dessins annexés dans lesquels :
- la figure 1 est une vue de face d'un plancher de véhicule automobile conçu en un matériau selon un mode de réalisation de l'invention ;
- la figure 2, déjà décrite, est une vue similaire à la figure 1 d'un plancher de véhicule automobile de l'état de la technique déformé suite à un choc ;
- la figure 3 est une vue similaire à la figure 2 du plancher de la figure 1 déformé suite à un choc ;
- la figure 4, déjà décrite, est une représentation schématique d'une coupe d'un matériau comportant une fibre noyée dans de la matière plastique ;
- la figure 5, déjà décrite, est une vue similaire à la figure 4 du matériau de l'état de la technique suite à un choc ;
- la figure 6 est une vue similaire à la figure 5 d'un matériau selon un mode de réalisation de l'invention, déformé suite à un choc ;
- la figure 7 est une vue de face du matériau de l'état de la technique de la figure 5 ayant subi un choc par poinçonnage ;
- la figure 8 est une vue similaire à la figure 7 du matériau de la figure 6 ayant subi un choc par poinçonnage.

On a représenté sur la figure 1 un plancher de véhicule automobile, désigné par la référence générale 10.

Le plancher 10 a une forme adaptée pour être agencé à l'arrière du véhicule automobile, et comporte notamment un logement 12 pour une roue de secours.

Afin de disposer d'un plancher ayant un bon comportement au choc, le plancher 10 est réalisé avec un matériau selon un mode de réalisation de l'invention, c'est-à-dire un matériau dont les fibres du tissu et la matière plastique sont choisies de manière que lorsque le matériau est au repos, les fibres sont solidarisées à la matière, et qu'à partir d'un certain niveau de sollicitation du matériau, les fibres se désolidarisent de la matière sur une certaine longueur sans se rompre.

A l'échelle d'une fibre 13, comme on le voit sur la figure 6, on observe que dans une région de sollicitation, la fibre 13 se libère de la matière plastique sur une longueur e, de sorte qu'elle peut localement s'allonger et se déformer sans se rompre.

Les fibres de renfort 13 sont agencées en un tissu de fibres noyé dans la matière plastique 14.

Ainsi, le plancher 10 conçu dans ce matériau se déforme sans se rompre lors d'un choc à l'arrière du véhicule puisque les fibres 13, qui ne se rompent pas, maintiennent la cohésion de la matière plastique 14 autour des zones de sollicitation.

On a représenté, sur la figure 3, un exemple de déformation du plancher 10 selon l'invention après un choc, par exemple un choc à 80 km/h. On notera qu'il ne comporte pas de rupture formant des bords tranchants, mais qu'il comporte uniquement des zones de déformations sans rupture.

On notera par ailleurs que ce plancher 10 se déforme sans trop endommager des fixations 16 qui le retiennent à un support 17.

Afin d'obtenir un matériau ayant ces propriétés, les fibres 13 du tissu, choisies de préférence parmi des fibres de verre, des fibres organiques, ou des fibres métalliques, ont subi un traitement par ensimage. Le tissu de fibres 13, de grammage généralement compris entre 200 et 800 g/m² (de préférence 546 g/mm²), est ensuite noyé dans la matière plastique par calandrage. La matière plastique 14 peut être une matière thermoplastique, comme par exemple du polypropylène, ou encore une matière thermodurcissable, comme par exemple du polyester.

En général, le matériau comporte entre 10 et 50% de fibres (de préférence 29%) et entre 10 et 50% de matière plastique (de préférence 41%).

De manière optionnelle, le matériau comporte, en plus du tissu de fibres, des fibres supplémentaires coupées et noyées dans la matière plastique. Ces fibres supplémentaires ont un effet de renfort du matériau.

En général, le matériau comporte des produits additionnels, tels que des colorants ou encore des produits servant à conception du matériau comme des agents de mûrissement et catalyseurs ou des inhibiteurs. Le cas échéant, le matériau comporte moins de 16% de ces produits additionnels, de préférence 8%.

Le matériau peut en outre comporter entre 0 et 60% de charges minérales, de préférence 22%.

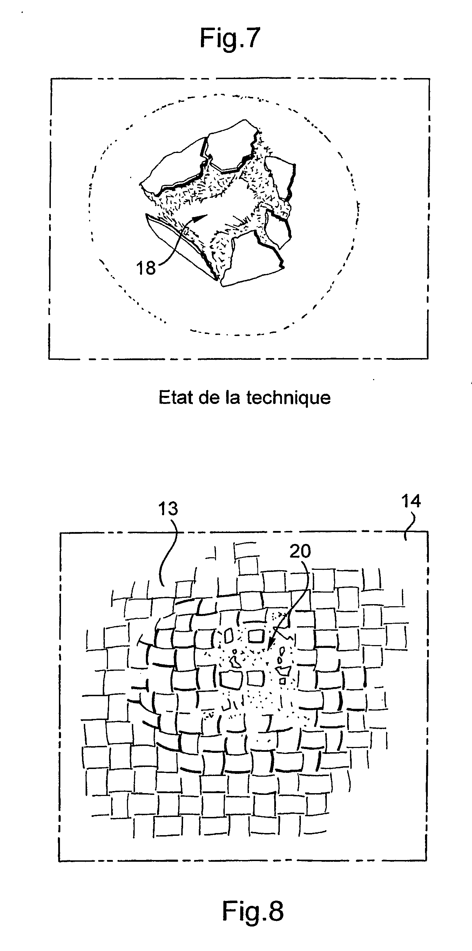

On se reportera aux figures 7 et 8 pour comparer les comportements d'un matériau de l'état de la technique (figure 7) et d'un matériau selon un mode de réalisation de l'invention (figure 8) soumis à un poinçonnage.

On remarque que le matériau de l'état de la technique est rompu dans une zone 18 correspondant au choc (voir figure 7). En effet, toute l'énergie du choc est concentrée dans cette zone 18 peu étendue, ce qui mène à la rupture du matériau. Ce matériau n'est donc pas adapté pour répondre aux exigences des cahiers des charges pour un plancher de véhicule automobile, puisqu'il permet le passage de flamme par les zones de rupture.

En revanche, avec un matériau selon un mode de réalisation de l'invention, l'énergie du choc s'étend sur une zone 20 plus grande (voir figure 8). En effet, suite au choc, les fibres 13 se libèrent de la matière plastique sur la zone 20 et peuvent ainsi se déformer plutôt que de se rompre en même temps que la matière plastique 14. Le matériau ne présente donc pas de zones de rupture et est plus adapté pour la conception d'un plancher 10 de véhicule automobile.

On notera que, pour des raisons économiques, le plancher 10 peut comporter du matériau selon l'invention uniquement dans des zones susceptibles d'être les plus sollicitées lors d'un choc. Le reste du plancher 10 comporte dans ce cas du matériau classique.

Bien entendu, l'invention n'est pas limitée au mode de réalisation décrit ci-dessus. En particulier, le matériau selon l'invention pourra être utilisé pour la conception d'autres pièces structurelles du véhicule automobile devant satisfaire un cahier des charges équivalent à celui du plancher de véhicule automobile décrit ci-dessus.

## Revendications

1. Matériau composé d'une matière plastique (14) et d'un tissu de fibres (13) de renfort noyé dans la matière plastique (14), **caractérisé par le fait que** les fibres (13) du tissu et la matière plastique (14) sont choisies de manière que lorsque le matériau est au repos, les fibres (13) sont solidarisées à la matière (14), et qu'à partir d'un certain niveau de sollicitation du matériau, les fibres (13) se désolidarisent de la matière (14) sur une certaine longueur sans de se rompre, dans lequel les fibres (13) du tissu (14) sont des fibres ayant subi un traitement par ensimage.

2. Matériau selon la revendication 1, dans lequel le tissu de fibres (13) est noyé dans la matière plastique (14) par calandrage lors de la fabrication.

3. Matériau selon l'une quelconque des revendications 1 et 2, comportant des fibres coupées noyées dans la matière plastique en plus du tissu de fibres.

4. Matériau selon l'une quelconque des revendications 1 à 3, comportant des produits additionnels tels que des colorants, des agents de mûrissement, des catalyseurs ou des inhibiteurs.

5. Matériau selon l'une quelconque des revendications 1 à 4, dans lequel les fibres (13) sont choisies parmi des fibres de verre, des fibres organiques ou des fibres métalliques.

6. Matériau selon l'une quelconque des revendications 1 à 5, dans lequel la matière plastique (14) est une matière thermodurcissable, par exemple du polyester.

7. Matériau selon l'une quelconque des revendications 1 à 5, dans lequel la matière plastique (14) est une matière thermoplastique, par exemple du polypropylène.

8. Matériau selon l'une quelconque des revendications 1 à 7, dans lequel le grammage du tissu est compris entre 200 et 800 g/m².

9. Matériau selon l'une quelconque des revendications 1 à 8, comportant entre 10% et 50% de fibres et entre 10% et 50% de matière plastique.

10. Plancher (10) de véhicule automobile, **caractérisé en ce qu'il** est conçu en un matériau selon l'une quelconque des revendications 1 à 9.

11. Plancher (10) de véhicule automobile selon la revendication 10, comportant du matériau selon l'une quelconque des revendications 1 à 9 uniquement dans des zones susceptibles d'être sollicitées lors d'un choc.

## Patentansprüche

1. Werkstoff, der sich aus einem Kunststoff (14) und aus einem Verstärkungsfasergewebe (13), das in den Kunststoff (14) eingearbeitet ist, zusammensetzt, dadurch gekennzeichet, dass die Fasern (13) des Gewebes und der Kunststoff (14) derart gewählt sind, dass die Fasern (13) fest mit dem Stoff (14) verbunden sind, wenn sich der Werkstoff im Ruhezustand befindet, und dass die Fasern (13) sich, ab einem bestimmen Ausmaß der Belastung des Werkstoffs, auf einer bestimmten Länge von dem Stoff (14) lösen, ohne zu zerreißen, wobei es sich bei den Fasern (13) des Gewebes (14) um Fasern handelt, die einer Beschichtungsbehandlung unverzogen wurden.

2. Werkstoff nach Anspruch 1, wobei das Fasergewebe (13) bei der Erstellung durch Kalandrierten in den Kunststoff (14) eingearbeitet ist.

3. Werkstoff nach einem beliebigen der Ansprüche 1 und 2, welcher zusätlich zu dem Fasergewebe geschnittene Fasern aufweist, die in den Kunststoff eingearbeitet sind.

4. Werkstoff nach einem beliebigen der Ansprüche 1 bis 3, welcher Zusatzstoffe aufweist, wie etwa Farbstoffe, Reifungshilfsmittel, Katalysatoren oder Inhibitoren.

5. Werkstoff nach einem beliebigen der Ansprüche 1 bis 4, wobei die Fasern (13) aus Glasfasern, organischen Fasern oder metallischen Fasern ausgewählt sind.

6. Werkstoff nach einem beliebigen der Ansprüche 1 bis 5, wobei es sich bei dem Kunststoff (14) um einen duroplastischen Stoff handelt, beilspielsweise um Polyester.

7. Werkstoff nach einem beliebigen der Ansprüche 1 bis 5, wobei es sich bei dem Kunststoff (14) um einen thermoplastischen Stoff handelt, beispielsweise um Polypropylen.

8. Werkstoff nach einem der Ansprüche 1 bis 7, wobei das Flächengewicht des Gewebes im Bereich von 200 bis 800 g/m² legt.

9. Werkstoff nach einem beliebigen der Ansprüche 1 bis 8, welcher wischen 10 % und 50 % an Fasern und zwischen 10 % und 50 % an Kunststoff aufweiset.

10. Kraftfahrzeugbodengruppe (10), dadurch gekenntzeichnet, dass sie aus einem Werkstoff nach einem beliebigen der Ansprüche 1 bis 9 hergestellt ist .

11. Kraftfahrzeugbodengruppe (10) nach Anspruch 10, welche den Wertstoff nach einem beliebigen der Ansprüche 1 bis 9 ausschließlich in Bereichen aufweist, die bei einem Stoß beansprucht werden können.

## Claims

1. A composite made up of a plastics material (14) and a fabric of reinforcing fibers (13) embedded in the plastics material (14), the composite being **characterized by** the fact that the fibers (13) of the fabric and the plastics material (14) are selected in such a manner that when the composite is at rest, the fibers (13) are bonded to the plastics material (14), and that on stress above a certain level being applied to the composite, the fibers (13) separate from the plastics material (14) over a certain length, without breaking, composite in which the fibers (13) of the fabric (14) are fibers that have been subjected to treatment by sizing.

2. A composite according to claim 1, in which the fabric of fibers (13) is embedded in the plastics material (14) by calendering during fabrication.

3. A composite according to any one of claims 1 to 2, including cut fibers embedded in the plastics material in addition to the fiber fabric.

4. A composite according to any one of claims 1 to 3, including additives such as dyes, setting agents, catalysts, or inhibitors.

5. A composite according to any one of claims 1 to 4, in which the fibers (13) are selected from glass fibers, organic fibers, or metal fibers.

6. A composite according to any one of claims 1 to 5, in which the plastics material (14) is a thermosetting material, e.g. polyester.

7. A composite according to any one of claims 1 to 5, in which the plastics material (14) is a thermoplastic material, e.g. polypropylene.

8. A composite according to any one of claims 1 to 7, in which the weight of the fabric lies in the range 200 g/m² to 800 g/m².

9. A composite according to any one of claims 1 to 8, comprising 10% to 50% fibers and 10% to 50% plastics material.

10. A motor vehicle floor (10), **characterized in that** it is made of a composite according to any one of claims 1 to 9.

11. A motor vehicle floor (10) according to claim 10, comprising the composite according to any one of claims 1 to 9 only in zones that are likely to be stressed in the event of an impact.
